# EUROPEAN PATENT SPECIFICATION

(11) **EP 1 065 139 B1**
(45) Date of publication and mention of the grant of the patent: **12.06.2002**
(21) Application number: 00106133.2
(22) Date of filing: 21.03.2000
(51) Int. Cl.: B62J 9/00

(54) **Motorbike transport case having release elements on the lid thereof**
Motorradkoffer mit Entriegelungselementen auf dem Deckel
Coffre de moto avec éléments de déblocage sur le couvercle

(43) Date of publication of application: 03.01.2001
(73) Proprietor: GI.VI. s.r.l., 25020 Flero (BS) (IT)
(72) Inventor: Visenzi, Vincenzo, Rezzato (BS) (IT)
(74) Representative: Seibert, Hannelore

(56) References cited:
- EP-A- 0 370 368
- EP-A- 0 517 265
- DE-A- 3 224 067
- DE-A- 3 935 064
- DE-C- 4 302 949

## Description

The invention relates to a motorbike transport case comprising:
- a base part arranged to be detachably fitted to a motorbike or a carrier plate mounted on a motorbike (the term "motorbike" as used in this specification encompassing motor scooters);
- a lid part hinged to the base part such that the lid part can be pivoted away from the base part to open the transport case and pivoted toward the base part to close the transport case;
- a latch mechanism provided in the base part and arranged to catch a fitting extension of a motorbike or carrier plate;
- a retaining mechanism arranged to retain the lid part to the base part in the closed state of the transport case;
- a first release mechanism comprising a first release control element operable to release the latch mechanism such that the transport case can be detached from the fitting extension; and
- a second release mechanism comprising a second release control element operable to release the retaining mechanism such that the transport case can be opened.

Motorbike transport cases of this type are described in the applicant's previous patents EP-B1-0370368 and EP-B1-0517265, for example, and in the applicant's earlier European patent application no. 99123097.0 (filed on 22.11.99 but not published prior to the filing date of the subject application).

DE-A-32 24 067 discloses a transport case for a bicycle. This transport case comprises a base part to be mounted to the frame of the bicycle, a lid part hinged to the base part, a retaining mechanism for retaining the lid part to the base part, and a release mechanism provided on the lid part, for releasing the retaining mechanism such that the transport case can be opened.

As has been well-known in the art, transport cases that can be fitted detachably to a motorbike provide an additional degree of freedom in that the user may employ such a case either separately from a motorbike (e.g. while walking as a pedestrian, working in an office or living in a hotel) or in a fitted state, i.e. when driving a motorbike to which the transport case has been fitted so that the user does not have to hold the case manually.

While the conventional detachable transport case thus provides considerable convenience to the user, a problem may arise when the base part of the transport case is fitted to a lateral support structure, e.g. carrier plate, of the motorbike. In that case, it is difficult to provide easy access to both the transport case and the release mechanisms. If the lid of the transport case is provided on the top thereof (to allow objects to be placed into the transport case from above), the release control elements conventionally arranged in the base part may be difficult to access. In another conceivable construction, it may be even necessary for the user to open the transport case in order to gain access to a control element to release the latch mechanism for detaching the transport case from the motorbike.

It is therefore an object of the invention to provide an innovative construction of a motorbike transport case which enhances the versatility, efficiency and/or user-friendliness thereof.

According to the invention, this object is achieved by arranging at least the first release control element on the lid part of the transport case such that in the closed state of the transport case, the first release control element provided on the lid part is operable to act on a moveable release member of the first release mechanism such as to release the latch mechanism.

When the first release control element is actuated in the closed state of the transport case, the movement of the release control element will be transferred to the moveable release member (i.e. the latch) in the base part so as to enable a control function (i.e. release of the latch mechanism) to be performed within the base part (while not fixing the lid part to the base part).

In other words, in the closed state of the transport case, the latch mechanism in the base part is released by transferring an actuating force from the first release control element (provided on the lid) to the moveable release member provided in the base part. In the open state of the transport case, the same release member may be directly accessible and manually operable to release the latch mechanism. The user can thus detach the transport case in the closed or open state thereof.

An additional lid-mounted release control element may act selectively on the retaining mechanism such that a retaining member retains the lid part to the base part or releases the lid part from the base part, respectively. In a preferred arrangement, said retaining member may be fastened to the release control element and may selectively engage and disengage a (preferably fixed) structure of the base part in order to retain the lid part to the base part or to release the lid part from the base part, respectively.

A release control element arranged on the lid part *inter alia* provides the following advantages:
- The release control element is as accessible as the lid part itself, irrespective of the actual (e.g. horizontal or vertical) orientation in which the transport case is fitted to a motorbike. Since the transport case is normally attached to the motorbike such that the lid is not obstructed by the motorbike structure, a release control element arranged on the lid part is likewise accessible.
- The release control element may be provided on a top-mounted lid of the transport case so that the motorbike driver can access the release control element (e.g. to open the transport case) without having to get off the motorbike.
- The release control element can be accompanied by a second lid-mounted release control element provided in close relationship so as to form a compact control cluster. It is particularly easy for such a cluster of control elements to share another mechanical function, such as a common lock, thus providing enhanced user convenience.

In a general aspect of the subject invention, the first and second release control elements may be implemented by a single component (e.g. a single push-button or a single rotary knob). However, in the presently preferred embodiment of the transport case, the first release control element is separate from the second release control element. By using two separate control elements for detaching and opening the transport case, these two functions can be implemented and performed more easily by both the manufacturer and user.

In a preferred embodiment of the invention, at least one of the first and second release control elements is seated in a respective opening that penetrates a wall of the lid part. The opening may form a channel that bears the respective release control element. When a release control element is provided in the form of a push-button, the opening channel may be arranged to guide the (preferably linear) sliding movement of the button through the wall of the lid part. When a release control element is provided for rotational movement, the opening may form a bearing for the rotary control element.

The first release control element may be preferably embodied by a push-button provided on the lid part because the (linear or arcuate) movement of a push-button in the lid can be transferred in a relatively easy manner to a counter-part in the base part. Alternatively, the first release control element may be realised by a rotary button, lever or any other operating means.

The second release control element may be likewise realised by any mechanical operating means such as a push-button, rotary button (knob), lever or the like.

A lock may be provided on the lid part in addition to the release control element(s) provided on the lid part, the lock providing security in that the release control element(s) cannot be used by unauthorised persons to detach or open the transport case.

In a preferred embodiment, one of the release control elements is embodied by a lock provided on the lid part. The lock can thus fulfil the function of the respective release control element and protect the release control element from unauthorised actuation. In a particularly preferred embodiment, it is the second release control element that is implemented by a lock provided on the lid part because the (e.g. rotary) movement of a lid-mounted lock can be translated in a relatively easy manner into a blocking action of a retaining member to retain the lid part to the base part.

A respective lock on the lid part may be provided for each release control element thereon. In a preferred arrangement, a single lock enables the two release control elements to be locked selectively and/or collectively such that operation of a single lock secures both the transport case to the motorbike and the lid part to the base part, thus preventing unauthorised persons from detaching and/or opening the transport case. The single lock is preferably embodied by one of the release control elements.

When a single lock (preferably embodying the second release control element) is provided on the lid part, the lock may have a first position in which neither the latch mechanism nor the retaining mechanism can be released by the release control elements, and a second position in which the latch mechanism, retaining mechanism

or both can be released by the respective release control elements. In that case, the single lock has two positions: a locked position and an unlocked position. In the locked position, the transport case can be neither detached nor opened. In the unlocked position, the transport case can be detached and/or opened.

In a particularly preferred embodiment, a single lock (preferably embodying the second release control element) is provided on the lid part and has three positions: In a first position of the lock, neither the latch mechanism nor the retaining mechanism can be released by the release control elements. In a second position of the lock, the latch mechanism can be released by the first release control element but the retaining mechanism cannot be released by the second release control element (or the latch mechanism cannot be released by the first release control element but the retaining mechanism can be released by the second release control element). In a third position of the lock, the latch mechanism can be released by the first release control element and the retaining mechanism can be released by the second release control element. In that case, the single lock has a locked position, a partially unlocked position, and a completely unlocked position. In the locked position, the transport case can be neither detached nor opened. In the partially unlocked position, the transport case can be detached but cannot be opened (or cannot be detached but can be opened). In the completely unlocked position, the transport case can be opened and/or detached.

In another conceivable embodiment, a single lock (preferably embodying the second release control element) is provided on the lid part and has four positions: a locked position, two partially unlocked positions, and a completely unlocked position. In the locked position, the transport case can be neither detached nor opened. In a first partially unlocked position, the transport case can be detached but cannot be opened. In a second partially unlocked position, the transport case can be opened but cannot be detached by the first release control element. In the completely unlocked position, the transport case can be opened and/or detached.

The lock is preferably operable by a key. Instead of requiring a mechanical key to be actuated (e.g. turned) in the lock, the lock may be designed to require some special tool, a combination code number, an electronic key (e.g. chip card) or the like. All of these items are intended to be covered by the term "key".

Preferably, the lock releases the key only when the lock is in the first, or completely locked, position. The user is thereby advantageously reminded to bring the key to the locking position before he/she withdraws the key.

In an advantageous embodiment, at least one release control element may be disposed in a depression area or pocket of the lid part where the release control element(s) are protected from inadvertent actuation or damage. At the same time, the user or other people (e.g. pedestrians) are protected from injuries which might be caused by control elements projecting from the contour of the transport case. Above all, such a depression area of the lid part allows the release control element(s) to be arranged close to the base part and thus facilitates the desired interaction of the release control element(s) with corresponding mechanisms provided in the base part.

Further features and advantages of the invention will become apparent from the description of a preferred embodiment given below with reference to the accompanying drawings wherein
Figure 1 is a front view of a motorbike transport case in the closed state thereof;
Figure 2 is a front view of the transport case in the open state thereof;
Figure 3 is a side view of the transport case, with two release control elements indicated in dashed lines, one of the release control elements being embodied by a push-button and the other release control element being embodied by a key-operable lock;
Figure 4 is a another front view of the transport case, with said two release control elements indicated in dashed lines;
Figure 5 is a top view of said two release control elements, with the key-operable lock being in a first, or completely locked, position:
Figure 6 is a sectional view, along line VI-VI in Figure 5, of the transport case when the lock is in its first position;
Figure 7 is a top view of said two release control elements, with the key-operable lock being in a second, or partially locked, position;
Figures 8A and 8B are sectional views, along line VIII-VIII in Figure 7, of the transport case when the lock is in its second position so that the transport case can be detached from the support structure of the motorbike;
Figure 9 is a top view of said two release control elements, with the key-operable lock being in a third, or completely unlocked, position;
Figures 10A and 10B are sectional views, along line X-X in Figure 9, of the transport case when the lock is in its third position so that the transport case can also be opened;
Figure 11 is a sectional view of a button seat portion provided in the lid part of the transport case, taken along line XI-XI in Figure 13;
Figure 12 is a sectional view of a lock seat portion provided in the lid part of the transport case, taken along line XII-XII in Figure 13;
Figure 13 is a top view of the button and lock portions provided in the lid part of the transport case; and
Figure 14 represents detailed views of individual components of the releasing and locking mechanisms.

Like parts are denoted by same reference numerals throughout the description. For clarity and completeness, various components constituting the locking and releasing mechanisms of the embodiment are also shown individually in Figure 14.

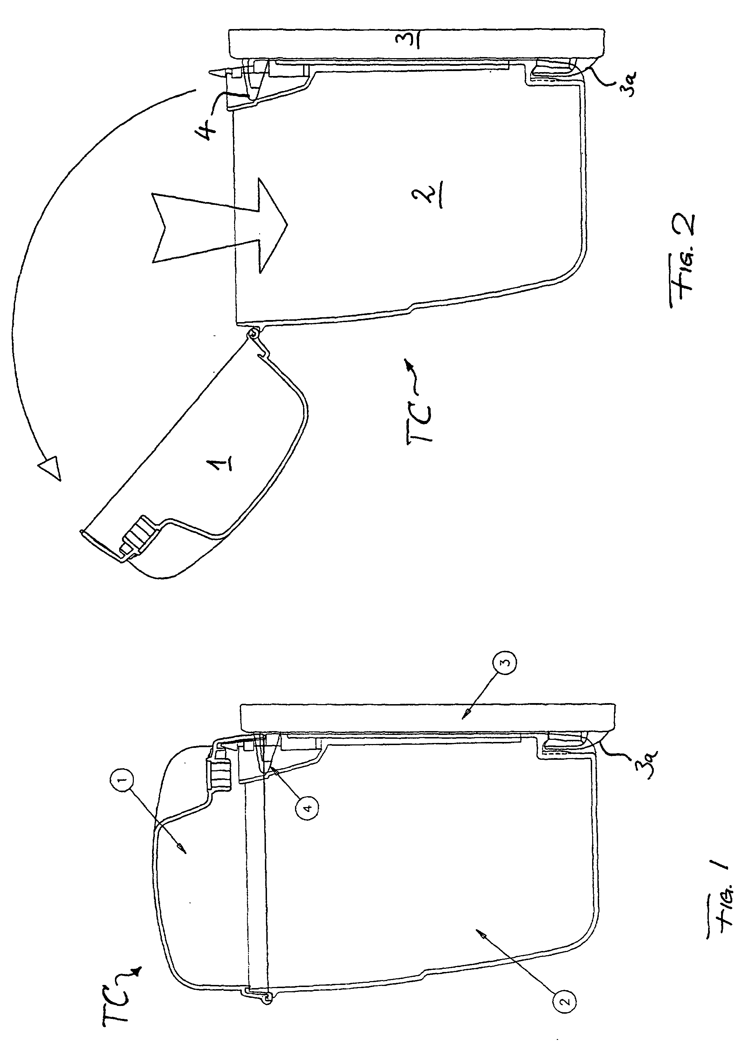

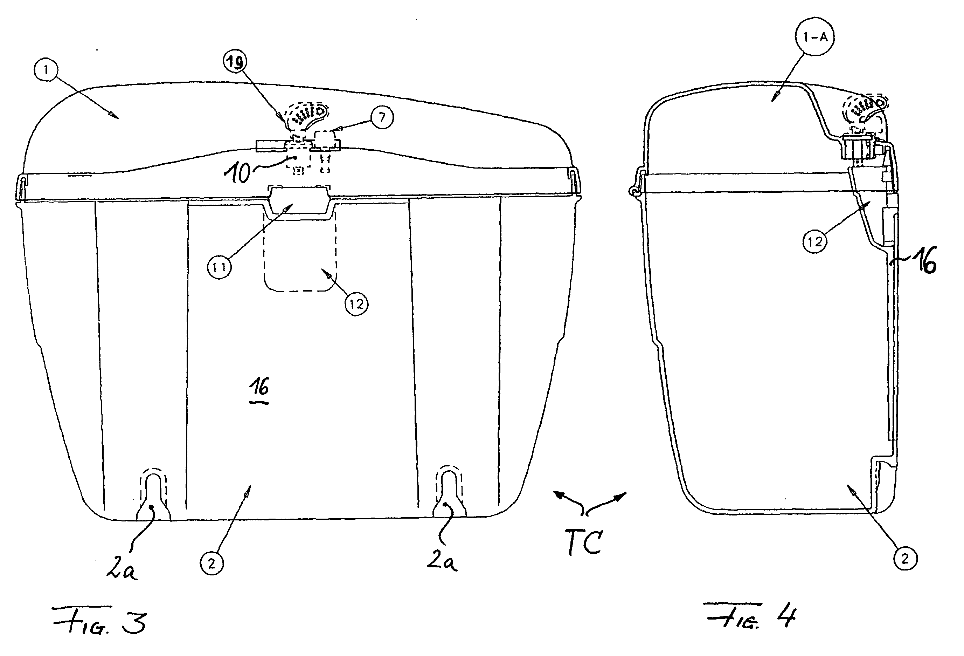

A transport case TC as illustrated schematically in Figures 1 and 2 comprises a base part 2 (also referred to as the bottom shell) and a lid part 1 mounted on top of the base part 2 (also referred to as the top shell). The lid part 1 is hinged to the base part 2 such that the lid part 1 can be pivoted onto the base part 2 to close the transport case, and pivoted away from the base part 2 to open the transport case (slim arrow in Figure 2) and to place objects into the base part 2 (large arrow in Figure 2). A retaining mechanism (to be described in greater detail below) is provided to retain the lid part 1 to the base part 2, and a release mechanism (also described in greater detail below) is provided to release the retaining mechanism so that the transport case can be opened. Preferably, the retaining mechanism can be locked and unlocked selectively (both functions being described in greater detail below).

The base part 2 can be fitted detachably on a support structure 3 of a motorbike (the term motorbike including motorscooters). The support structure 3 may be formed by a rack of the motorbike itself or by a standardised carrier plate additionally mounted on (possibly retrofitted to) the motorbike. While in the example shown the base part 2 is fitted to a substantially vertical support structure 3 of the motorbike, the subject application also contemplates alternative arrangements in which the base part 2 may be fitted in any other orientation, e.g. on a substantially horizontal structure of the motorbike. In either case, the lid part may be hinged to the base part such as to be pivotable about a horizontal axis or a vertical axis. Likewise, the transport case is not restricted to being fitted to a lateral support structure of a motorbike. The invention is also applicable to transport cases for use on a rear or front structure of a motorbike.

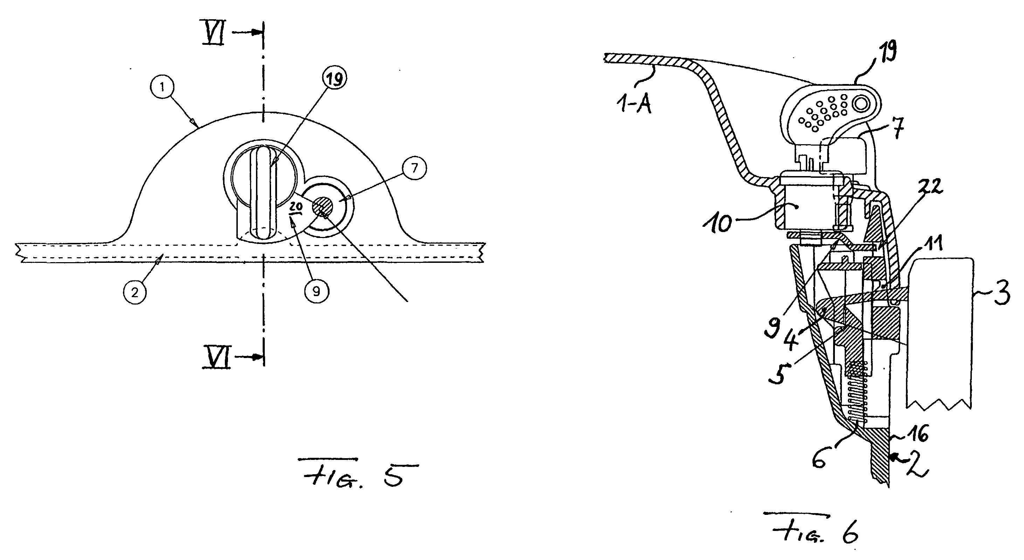

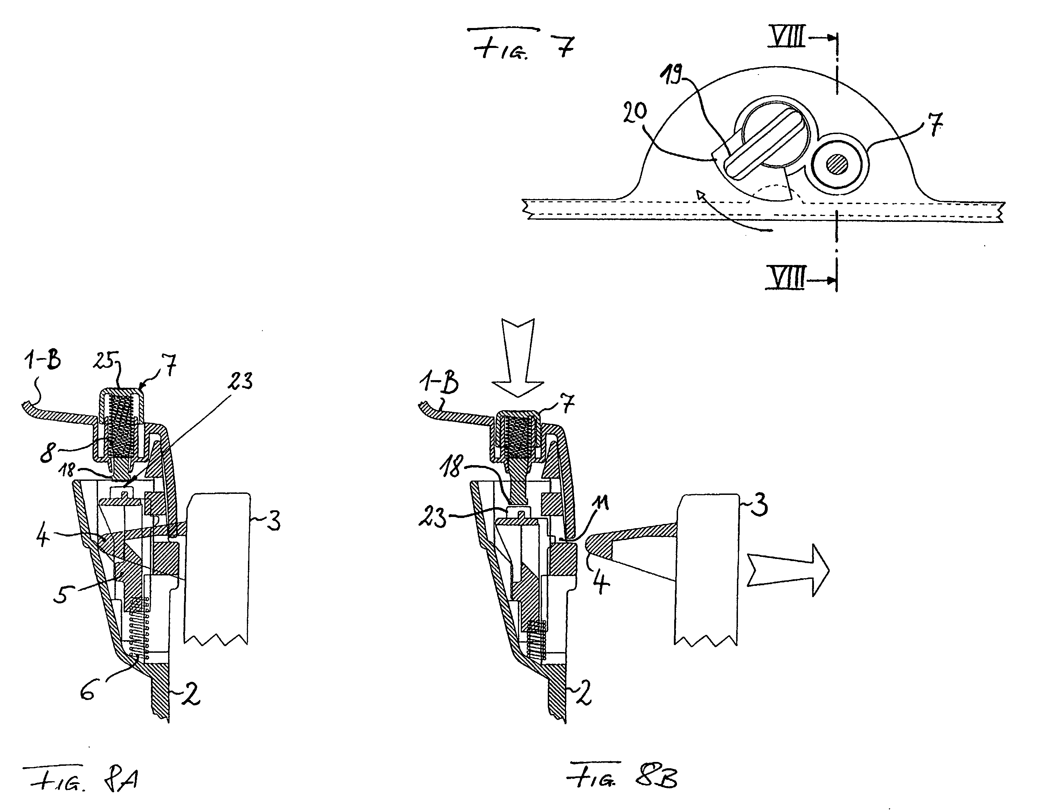

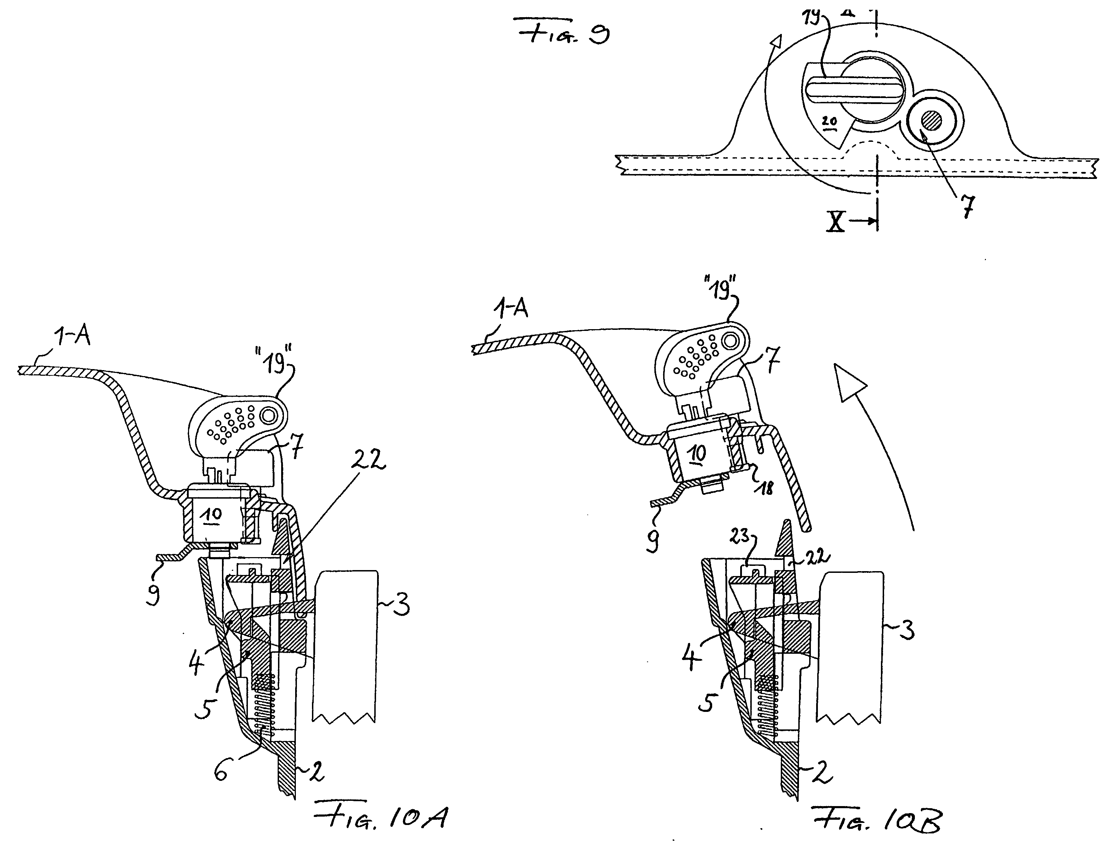

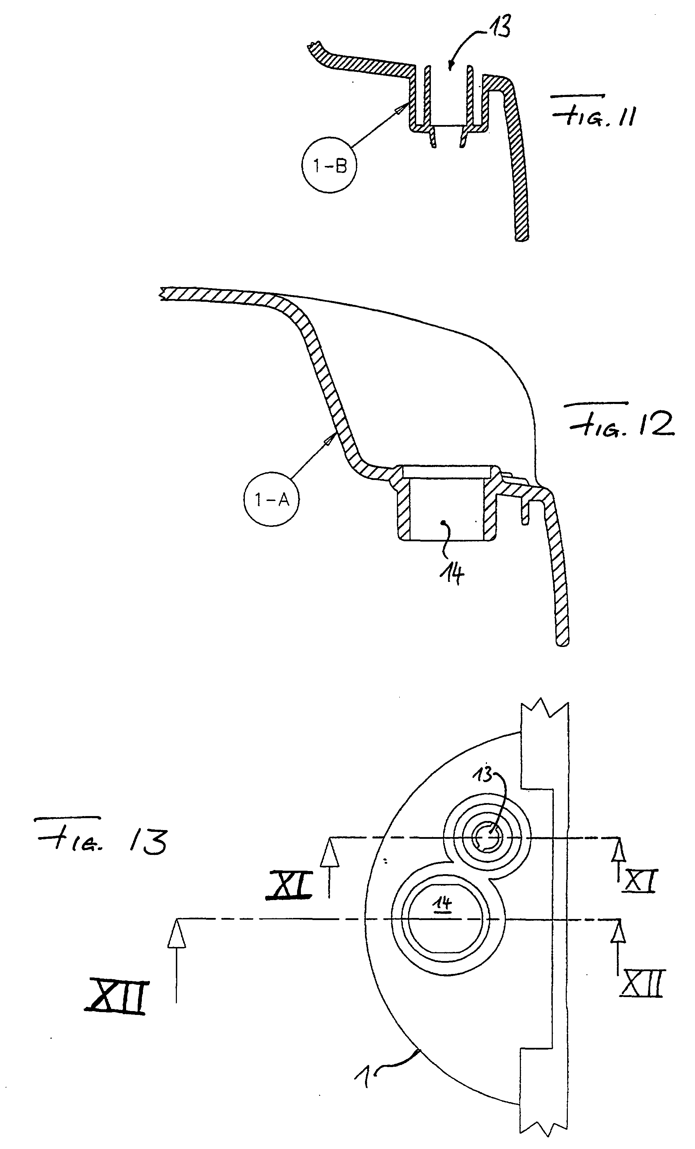

In the embodiment shown, the support structure 3 comprises a pair of hooks 3a arranged at the lower edge of support structure 3. When the transport case is being fitted, or attached, to the support structure 3, the hooks 3a engage mating grooves 2a (Figure 3) provided at a lower edge of a side wall 16 of the transport case TC. In order to secure the transport case to the support structure 3, an upper central portion of the support structure 3 comprises a hook-shaped fitting extension 4 projecting vertically from the support structure 3 and arranged to enter a corresponding cavity 12 of the base part 2 (Figures 3, 4 and 14). The cavity 12 of base part 2 is provided with a latch mechanism 5 biased upwardly by at least one return spring 6 likewise arranged in the cavity 12. When the transport case is to be attached to the support structure 3, the fitting extension 4 passes through an opening 11 disposed in the side wall 16 of the transport case. Upon entering the cavity 12, the fitting extension 4 displaces the latch 5 against the resilient force of the return spring(s) 6 until the hook-shaped end of the fitting extension 4 is caught by an edge 24 of the returning latch 5 (Figures 6, 8A, and 14). In the preferred embodiment shown, the latch 5 is displaced vertically; generally, the latch 5 may be displaceable in any direction substantially perpendicular to the fitting extension 4 entering cavity 12. A rib 15 is designed on the latch 5 such as to engage the side wall 16 (e.g. the opening 11 thereof) to limit the upward movement of the latch 5 when the latch 5 is urged upwardly by the return spring(s) 6.

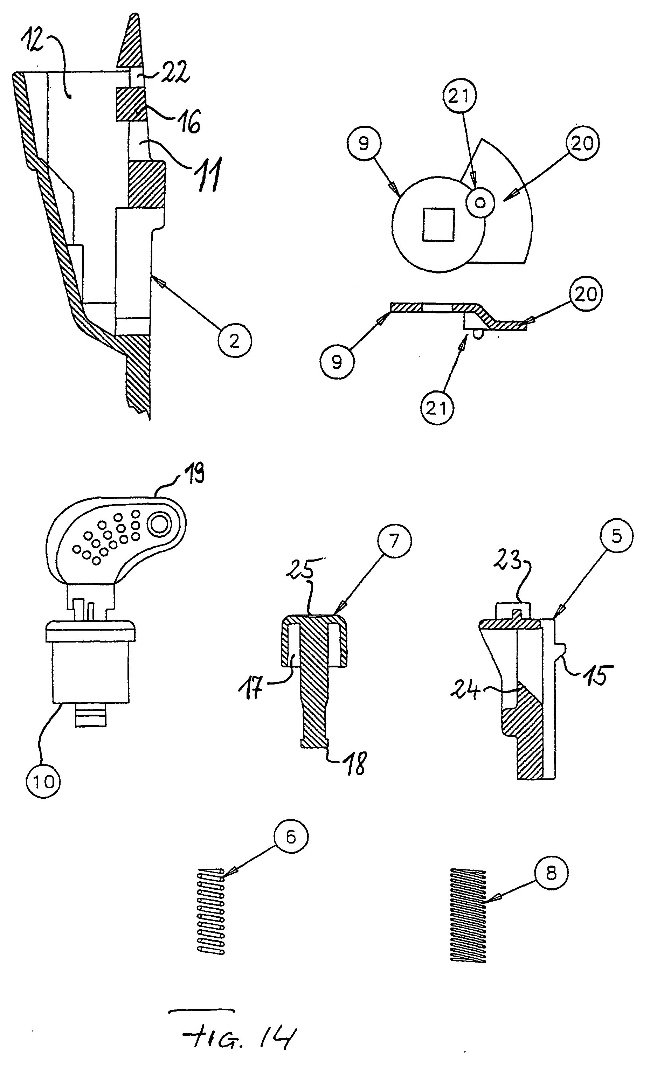

When the transport case is to be detached from the support structure 3, the fitting extension 4 of the support structure 3 has to be released from the base part 2. To this end, latch 5 has to be moved downwardly until the hook-shaped end of the fitting extension 4 is released from the edge 24 of latch 5 so that the fitting extension 4 can leave the cavity 12 through the opening 11 of base part 2 (Figures 8B and 14). The downward movement of latch 5 to release the fitting extension 4 is accomplished by actuating a first release control element which is embodied by a push-button 7 provided on the lid part 1 (as best seen in Figures 8A and 8B). More specifically, the push-button 7 may be seated in an opening 13 disposed in a button seat portion 1-B of the lid part 1 (Figures 11 and 13). In an idling state of the push-button 7 (Figure 8A), the button 7 is urged upwardly by a return spring 8 (accommodated in an annular recess 17 of button 7) to make the button 7 project vertically from the outer (upper) surface of lid part 1 allowing the user easy access to button 7. When the user exerts a manual force on the button 7 by depressing the top face 25 of button 7 (vertical arrow in Figure 8B), the button 7 is pushed through opening 13 of the button seat portion 1-B, and a lower end 18 of push-button 7 strikes an upper end 23 of latch 5 so as to drive the latch 5 downwardly and release the fitting extension 4 from latch 5 (horizontal arrow in Figure 8B).

The lower end 18 of push-button 7 is not fixed to the upper end 23 of latch 5. In the idling state of push-button 7 (Figure 8A), there may be even a gap between the respective ends 18 and 23. Therefore, the lid part 1 can be pivoted upwardly (Figure 10B) without interference by the latch release mechanism although the first release control element (push-button 7) is mounted on the lid part 1 and the co-operating latch 5 is arranged in the base part 2 of the transport case.

The transport case is further provided with a retaining mechanism to retain the lid part 1 to the base part 2 in the closed state of the transport case. Referring in particular to Figure 6, the retaining mechanism may comprise a retaining member 9, 20 (see also Figure 14) arranged to engage a slot 22 in the side wall 16 of the base part 2. The retaining member 9 is linked to a second release control element 10, the second release control element 10 being preferably provided on the lid part 1 for easy access by a user. More specifically, the release control element 10 may be seated in an opening 14 disposed in a seat portion 1-A of the lid part 1 (Figures 12 and 13). In a preferred arrangement, the second release control element 10 may be embodied by a lock; in that case, the lid portion 1-A will be referred to as a lock seat portion 1-A.

The second release control element 10 may be operated by a lever 19 projecting from the outer (e.g. upper) surface of lid part 1. Lever 19 is preferably embodied by a key when the second release control element 10 is embodied by a lock. According to the example shown, the second release control element 10 is arranged for rotary movement within seat portion 1-A, and lever 19 may be used to rotate the second release control element 10 and the retaining member 9 linked thereto so that the retaining member 9 disengages the slot 22 (Figure 10A) and the transport case can be opened (Figure 10B). When the transport case has been opened, the user may release the fitting extension 4 by directly depressing the exposed upper end 23 of the latch 5.

Once the lid part 1 has been pivoted back onto the base part 2 (Figure 10A), lever 19 can be used to reset the rotary position of the release control element 10 and retaining member 9 such that the retaining member 9 engages the slot 22 (Figure 6) and the transport case cannot be opened. Note that for better visibility the lever (e.g. key) "19" in Figures 10A, 10B is represented in an angular position which does not actually correspond to the sectional view of lever 19 taken along line X-X in Figure 9.

As best seen in Figures 3 to 6 and 12, the release control elements 7, 10 provided on the lid part 1 may be disposed in a depression area or pocket of the lid part 1 where the release control elements are protected from inadvertent actuation or damage. At the same time, the user or other people (e.g. pedestrians) are protected from injuries which might be caused by control elements projecting from the contour of the transport case. In any event, such a depression area of the lid part 1 allows the release control elements to be arranged close to the base part 2 which facilitates the desired interaction of the release control elements with corresponding release mechanisms provided in the base part 2.

In a preferred arrangement, the transport case is protected against detaching and/or opening by unauthorised persons. To this end, the transport case (preferably the lid part thereof) may be provided with a lock to prevent detaching of the transport case from the support structure 3; another lock may be provided to prevent opening of the transport case. Preferably, a single lock is provided to prevent both detaching and opening of the transport case.

In a preferred embodiment, the release control elements 7, 10 themselves implement desired locking functions. In a particularly preferred embodiment, one of the release control elements 7, 10 implements locking functions against both detaching and opening of the transport case.

More specifically, the second release control element 10 may be embodied by a lock to protect the transport case against unauthorised opening. Such a lock 10 may be a rotary lock and is preferably operable by an associated key 19. When the lock 10 is in the position illustrated in Figures 5 and 6 (with or without a key 19 being inserted in the lock 10), the retaining member 9 fixed to an inner axle of the lock 10 engages slot 22 so that the lid part 1 cannot be pivoted from the base part 2. When key 19 is used to bring lock 10 to the position shown in Figure 9, the retaining member 9 no longer engages slot 22 (Figure 10A) and the transport case can be opened (Figure 10B). With key 19 being in the angular position shown in Figure 9, the lid part 1 can be returned to rest on base part 2 (Figure 10A) and the key 19 enables the lock 10 to be returned to the locked position illustrated in Figures 5 and 6. In that locked position, preferably only in that position, the key 19 can be withdrawn to prevent unauthorised persons from turning the lock 10.

In a particularly preferred embodiment, the same lock 10 is used to lock the detaching mechanism as well. To this end, the retaining member 9 operable by the lock 10 comprises a projection 20 which prevents the first release control element (push-button 7) from acting on the upper end 23 of latch 5 (see Figures 5 and 6) when the lock 10 is in its first position as shown in Figure 5. Therefore, the fitting extension 4 cannot be released and the transport case cannot be detached. When the key 19 is used to bring the lock 10 to a second position as shown in Figure 7 or a third position as shown in Figure 9, the projection 20 of retaining member 9 no longer interferes with the lower end 18 of push-button 7 so that the push-button 7 can be pushed downwardly to drive the latch 5 downwardly to release the fitting extension 4 and detach the base part 2 from the support structure 3.

Thus, in the most preferred embodiment, one of the release control elements implements a single lock having three positions: In the first, or completely locked, position according to Figures 5 and 6, push-button 7 cannot be operated and the lid part 1 cannot be pivoted upwardly. In the second, or partially unlocked position according to Figures 7, 8A and 8B, the push-button 7 can be actuated to detach the transport case from the support structure 3. Finally, in the third, or completely unlocked, position according to Figures 9, 10A and 10B, it is additionally possible to open the transport case.

Attachment of the transport case to the support structure, or plate, 3 is independent of the position of key 19 (i.e. key 19 can be in any of the described positions). It is enough to press the transport case onto the support plate 3 so that the fitting extension 4 is caught by the snap action of the spring-loaded latch 5.

By modifying the shape of projection 20 around the periphery of retaining member 9 it is possible to achieve different locking functions. For example, an additional projection on retaining member 9 might block the push-button 7 in the third position of the lock 10 (Figure 9) so that the third position would only allow the transport case to be opened (and not detached by the push-button 7). In that case, a fourth lock position might be provided in which the transport case can be both detached and opened.

Preferably, the lock 10 receiving key 19 is arranged such that the key has to be rotated through relatively large angles, e.g. 45° and 90°, in order to switch the lock 10 from the locked state to the partially and completely unlocked states, respectively. In this manner, slight rotation of the key 19 cannot change the locking state inadvertently. Further, if large angles are chosen, it is particularly easy and reliable for the user to distinguish the positions of the key 19 and, thus, to recognise the current state and function of the lock 10.

For the user's convenience, the retaining member 9 may carry a resilient (e.g. spring-loaded) pin 21 providing tactile and/or acoustic feedback for the user to identify the correct position of the lock 10 in the various configurations.

### List of reference signs

- TC: transport case
- 1: lid part (top shell) of the transport case
- 1-A: lock seat portion of the lid part
- 1-B: button seat portion of the lid part
- 2: base part (bottom shell) of the transport case
- 2a: groove
- 3: support structure (motorbike rack; carrier plate)
- 3a: hook of support structure 3
- 4: fitting extension
- 5: latch
- 6: latch return spring(s)
- 7: push-button
- 8: button return spring
- 9: retaining member (inner lock)
- 10: lock
- 11: opening in side wall 16
- 12: cavity in base part 2
- 13: opening in button seat portion 1-B
- 14: opening in lock seat portion 1-A
- 15: rib on latch 5
- 16: side wall of base part 2
- 17: annular recess of push-button 7
- 18: lower end of push-button 7
- 19: key
- 20: projection of retaining member 9
- 21: resilient pin on retaining member 9
- 22: slot in side wall 16
- 23: upper end of latch 5
- 24: catching edge of latch 5
- 25: top face of push-button 7

## Claims

1. A motorbike transport case (TC) comprising:
- a base part (2) arranged to be detachably fitted to a motorbike or a carrier plate (3) mounted on a motorbike;
- a lid part (1) hinged to the base part (2) such that the lid part (1) can be pivoted away from the base part (2) to open the transport case (TC) and pivoted toward the base part (2) to close the transport case (TC);
- a latch mechanism (5) provided in the base part (2) and arranged to catch a fitting extension (4) of a motorbike or carrier plate;
- a retaining mechanism (9, 22) arranged to retain the lid part (1) to the base part (2) in the closed state of the transport case (TC);
- a first release mechanism (18, 23) comprising a first release control element (7) operable to release the latch mechanism (5) such that the transport case can be detached from the fitting extension (4); and
- a second release mechanism comprising a second release control element (10, 20) operable to release the retaining mechanism (9, 22) such that the transport case can be opened;
**characterised in that**
- at least the first release control element, which is preferably a push-button (7), is provided on the lid part (1), and
- in the closed state of the transport case, the first release control element (7) provided on the lid part (1) is operable to act on a moveable release member (23) of the first release mechanism such as to release the latch mechanism (5).

2. The motorbike transport case (TC) according to claim 1, **characterised in that**
- the first release control element (7) is seated in an opening (13) that penetrates a first wall (1-B) of the lid part (1).

3. The motorbike transport case (TC) according to claim 1 or 2, **characterised in that**
- the second release control element (10, 20) is seated in an opening (14) that penetrates a second wall (1-A) of the lid part (1).

4. The motorbike transport case (TC) according to any of the preceding claims, **characterised in that**
- at least one (7) of the first and second release control elements is arranged for linear movement through a respective wall opening (13) of the lid part (1).

5. The motorbike transport case (TC) according to any of the preceding claims, **characterised in that**
- at least one (10) of the first and second release control elements is arranged for rotary movement in a respective wall opening (14) of the lid part (1):

6. The motorbike transport case (TC) according to any of the preceding claims, **characterised in that**
- in the open state of the transport case, the release member (23) of the first release mechanism can be accessed directly and operated manually to release the latch mechanism (5).

7. The motorbike transport case (TC) according to any of the preceding claims, **characterised in that**
- the second release control element, preferably a lock (10), is provided on the lid part (1), and
- in the closed state of the transport case, the second release control element (10) is operable to act selectively on the retaining mechanism (9, 20, 22) such that a retaining member (9, 20) retains the lid part (1) to the base part (2) or releases the lid part (1) from the base part (2), respectively.

8. The motorbike transport case (TC) according to claim 7, **characterised in that**
- the retaining member (9, 20) is fastened to the second release control element (10), and
- in the closed state of the transport case, the second release control element (10) is operable such that the retaining member (9, 20) selectively engages and disengages a preferably fixed structure (22) of the base part (2) in order to retain the lid part (1) to the base part (2) or to release the lid part (1) from the base part (2), respectively.

9. The motorbike transport case (TC) according to any of the preceding claims, **characterised in that** the lid part (1) further comprises a lock (10) having
- a first position in which the latch mechanism (5) cannot be released by the first release control element (7) and the retaining mechanism (9, 20, 22) is not released by the second release control element (10), and
- at least a second position in which the latch mechanism (5) can be released by the first release control element (7) and/or the retaining mechanism (9, 20, 22) is released by the second release control element (10).

10. The motorbike transport case (TC) according to claim 9, **characterised in that** the lock (10) has
- a first position in which the latch mechanism (5) cannot be released by the first release control element (7) and the retaining mechanism (9, 20, 22) is not released by the second release control element (10),
- a second position in which the latch mechanism (5) can be released by the first release control element (7) but the retaining mechanism (9, 20, 22) is not be released by the second release control element (10), and
- a third position in which the latch mechanism (5) can be released by the first release control element (7) and the retaining mechanism (9, 20, 22) is released by the second release control element (10).

11. The motorbike transport case (TC) according to claim 9, **characterised in that** the lock (10) has
- a first position in which the latch mechanism (5) cannot be released by the first release control element (7) and the retaining mechanism (9, 20, 22) is not released by the second release control element (10),
- a second position in which the latch mechanism (5) cannot be released by the first release control element (7) but the retaining mechanism (9, 20, 22) is released by the second release control element (10), and
- a third position in which the latch mechanism (5) can be released by the first release control element (7) and the retaining mechanism (9, 20, 22) is released by the second release control element (10).

## Patentansprüche

1. Transportkoffer (TC) für ein Motorrad, mit:
- einem Basisteil (2), das ausgebildet ist, lösbar mit einem Motorrad oder einer an einem Motorrad montierten Trägerplatte (3) verbunden zu werden;
- einem Deckelteil (1), das am Basisteil (2) in der Weise angelenkt ist, dass das Deckelteil (1) vom Basisteil (2) weggeschwenkt werden kann, um den Transportkoffer (TC) zu öffnen, und zum Basisteil (2) hingeschwenkt werden kann, um den Transportkoffer (TC) zu schließen;
- einem im Basisteil (2) angeordneten Riegelmechanismus (5) zum Fangen eines Verbindungsvorsprungs (4) eines Motorrads oder einer Trägerplatte;
- einem Haltemechanismus (9, 22), der ausgebildet ist, im geschlossenen Zustand des Transportkoffers (TC) das Deckelteil (1) am Basisteil (2) zu halten;
- einem ersten Freigabemechanismus (18, 23) mit einem ersten Freigabesteuerelement (7), das betätigt werden kann, um den Riegelmechanismus (5) freizugeben, so dass der Transportkoffer vom Verbindungsvorsprung (4) gelöst werden kann; und
- einem zweiten Freigabemechanismus mit einem zweiten Freigabesteuerelement (10, 20), das betätigt werden kann, um den Haltemechanismus (9, 22) freizugeben, so dass der Transportkoffer geöffnet werden kann;
**dadurch gekennzeichnet, dass**
- wenigstens das erste Freigabesteuerelement, welches vorzugsweise ein Druckknopf (7) ist, am Deckelteil (1) angeordnet ist, und
- das am Deckelteil (1) angeordnete erste Freigabesteuerelement (7) im geschlossenen Zustand des Transportkoffers betätigt werden kann, um auf ein bewegliches Freigabeglied (23) des ersten Freigabemechanismus zu wirken, so dass der Riegelmechanismus (5) freigegeben wird.

2. Transportkoffer (TC) für ein Motorrad, nach Anspruch 1, **dadurch gekennzeichnet, dass**
- das erste Freigabesteuerelement (7) in einer Öffnung (13) sitzt, die eine erste Wand (1-B) des Deckelteils (1) durchdringt.

3. Transportkoffer (TC) für ein Motorrad, nach Anspruch 1 oder 2, **dadurch gekennzeichnet, dass**
- das zweite Freigabesteuerelement (10, 20) in einer Öffnung (14) sitzt, die eine zweite Wand (1-A) des Deckelteils (1) durchdringt.

4. Transportkoffer (TC) für ein Motorrad, nach einem der vorangehenden Ansprüche, **dadurch gekennzeichnet, dass**
- das erste (7) und/oder das zweite Freigabesteuerelement in der Weise angeordnet ist, dass es geradlinig durch eine zugehörige Wandöffnung (13) des Deckelteils (1) bewegbar ist.

5. Transportkoffer (TC) für ein Motorrad, nach einem der vorangehenden Ansprüche, **dadurch gekennzeichnet, dass**
- das erste und/oder das zweite (10) Freigabesteuerelement in der Weise angeordnet ist, dass es in einer zugehörigen Wandöffnung (14) des Deckelteils (1) drehbeweglich ist.

6. Transportkoffer (TC) für ein Motorrad, nach einem der vorangehenden Ansprüche, **dadurch gekennzeichnet, dass**
- im offenen Zustand des Transportkoffers das Freigabeelement (23) des ersten Freigabemechanismus unmittelbar zugänglich und manuell betätigbar ist, um den Riegelmechanismus (5) freizugeben.

7. Transportkoffer (TC) für ein Motorrad, nach einem der vorangehenden Ansprüche, **dadurch gekennzeichnet, dass**
- das zweite Freigabesteuerelement, vorzugsweise ein Schloss (10), am Deckelteil (1) angeordnet ist, und
- im geschlossenen Zustand des Transportkoffers das zweite Freigabesteuerelement (10) betätigbar ist, um wahlweise auf den Haltemechanismus (9, 20, 22) zu wirken, so dass ein Halteglied (9, 20) das Deckelteil (1) am Basisteil (2) hält bzw das Deckelteil (1) vom Basisteil (2) freigibt.

8. Transportkoffer (TC) für ein Motorrad, nach Anspruch 7, **dadurch gekennzeichnet, dass**
- das Halteglied (9, 20) am zweiten Freigabesteuerelement (10) befestigt ist, und
- im geschlossenen Zustand des Transportkoffers das zweite Freigabesteuerelement (10) in der Weise betätigbar ist, dass das Halteglied (9, 20) in ein vorzugsweise feststehendes Bauteil (22) des Basisteils (2) wahlweise eingreift oder nicht eingreift, um das Deckelteil (1) am Basisteil (2) zu halten bzw das Deckelteil (1) vom Basisteil (2) freizugeben.

9. Transportkoffer (TC) für ein Motorrad, nach einem der vorangehenden Ansprüche, **dadurch gekennzeichnet, dass** das Deckelteil (1) ferner ein Schloss (10) mit folgenden Stellungen aufweist:
- einer ersten Stellung, in der der Riegelmechanismus (5) durch das erste Freigabesteuerelement (7) nicht freigegeben werden kann und der Haltemechanismus (9, 20, 22) durch das zweite Freigabesteuerelement (10) nicht freigegeben ist, und
- wenigstens einer zweiten Stellung, in der der Riegelmechanismus (5) durch das erste Freigabesteuerelement (7) freigegeben werden kann und/oder der Haltemechanismus (9, 20, 22) durch das zweite Freigabesteuerelement (10) freigegeben ist.

10. Transportkoffer (TC) für ein Motorrad, nach Anspruch 9, **dadurch gekennzeichnet, dass** das Schloss (10) folgende Stellungen aufweist:
- eine erste Stellung, in der der Riegelmechanismus (5) durch das erste Freigabesteuerelement (7) nicht freigegeben werden kann und der Haltemechanismus (9, 20, 22) durch das zweite Freigabesteuerelement (10) nicht freigegeben ist,
- eine zweite Stellung, in der der Riegelmechanismus (5) durch das erste Freigabesteuerelement (7) freigegeben werden kann, aber der Haltemechanismus (9, 20, 22) durch das zweite Freigabesteuerelement (10) nicht freigegeben ist, und
- eine dritte Stellung, in der der Riegelmechanismus (5) durch das erste Freigabesteuerelement (7) freigegeben werden kann und der Haltemechanismus (9, 20, 22) durch das zweite Freigabesteuerelement (10) freigegeben ist.

11. Transportkoffer (TC) für ein Motorrad, nach Anspruch 9, **dadurch gekennzeichnet, dass** das Schloss (10) folgende Stellungen aufweist:
- eine erste Stellung, in der der Riegelmechanismus (5) durch das erste Freigabesteuerelement (7) nicht freigegeben werden kann und der Haltemechanismus (9, 20, 22) durch das zweite Freigabesteuerelement (10) nicht freigegeben ist,
- eine zweite Stellung, in der der Riegelmechanismus (5) durch das erste Freigabesteuerelement (7) nicht freigegeben werden kann, aber der Haltemechanismus (9, 20, 22) durch das zweite Freigabesteuerelement (10) freigegeben ist, und
- eine dritte Stellung, in der der Riegelmechanismus (5) durch das erste Freigabesteuerelement (7) freigegeben werden kann und der Haltemechanismus (9, 20, 22) durch das zweite Freigabesteuerelement (10) freigegeben ist.

## Revendications

1. Coffre de transport (TC) pour moto, comportant:
- une partie de base (2) susceptible d'être fixée, de façon amovible, à une moto ou une plaque porteuse (3) montée à une moto;
- une partie de couvercle (1) articulée à la partie de base (2) de façon à ce que la partie de couvercle (1) puisse pivoter pour s'éloigner de la partie de base (2), afin d'ouvrir le coffre de transport (TC), et pivoter vers la partie de base (2) afin de fermer le coffre de transport (TC);
- un mécanisme de verrouillage (5) disposé dans la partie de base (2) et agencé pour attraper un prolongement de fixation (4) de la moto ou de la plaque porteuse;
- un mécanisme de rétention (9, 22) agencé pour retenir, dans l'état fermé du coffre de transport (TC), la partie de couvercle (1) sur la partie de base (2);
- un premier mécanisme de déblocage (18, 23) comprenant un premier élément de contrôle de déblocage (7) qui peut être actionné pour débloquer le mécanisme de verrouillage (5) de façon à ce que le coffre de transport puisse être détaché du prolongement de fixation (4); et
- un deuxième mécanisme de déblocage comprenant un deuxième élément de contrôle de déblocage (10, 20) qui peut être actionné pour débloquer le mécanisme de rétention (9, 22) de façon à ce que le coffre de transport puisse être ouvert;
**caractérisé en ce que**
- au moins le premier élément de contrôle de déblocage, qui est de préférence un bouton-poussoir (7), est disposé sur la partie de couvercle (1), et
- dans l'état fermé du coffre de transport (TC), le premier élément de contrôle de déblocage (7) disposé sur la partie de couvercle (1) peut être actionné pour agir sur un membre de déblocage mobile (23) du premier mécanisme de déblocage afin de débloquer le mécanisme de verrouillage (5).

2. Coffre de transport (TC) pour moto, selon la revendication 1, **caractérisé en ce que**
- le premier élément de contrôle de déblocage (7) est logé dans une ouverture (13) traversant une première paroi (1-B) de la partie de couvercle (1).

3. Coffre de transport (TC) pour moto, selon la revendication 1 ou 2, **caractérisé en ce que**
- le deuxième élément de contrôle de déblocage (10, 20) est logé dans une ouverture (14) traversant une deuxième paroi (1-A) de la partie de couvercle (1).

4. Coffre de transport (TC) pour moto, selon l'une quelconque des revendications précédentes, **caractérisé en ce que**
- au moins un (7) des premier et deuxième éléments de contrôle de déblocage est agencé pour être déplacé de façon linéaire dans une ouverture (13) pratiquée dans une paroi de la partie de couvercle (1).

5. Coffre de transport (TC) pour moto, selon l'une quelconque des revendications précédentes, **caractérisé en ce que**
- au moins un (10) des premier et deuxième éléments de contrôle de déblocage est agencé pour être tourné dans une ouverture (14) pratiquée dans une paroi de la partie de couvercle (1).

6. Coffre de transport (TC) pour moto, selon l'une quelconque des revendications précédentes, **caractérisé en ce que**
- dans l'état ouvert du coffre de transport, on peut directement accéder au membre de déblocage (23) du premier mécanisme de déblocage et actionner manuellement ce membre afin de débloquer le mécanisme de verrouillage (5).

7. Coffre de transport (TC) pour moto, selon l'une quelconque des revendications précédentes, **caractérisé en ce que**
- le deuxième élément de contrôle de déblocage, de préférence une serrure (10), est disposé sur la partie de couvercle (1), et
- dans l'état fermé du coffre de transport, le deuxième élément (10) de contrôle de déblocage peut être actionné pour agir, de manière sélective, sur le mécanisme de rétention (9, 20, 22) de façon à ce que un membre de rétention (9, 20) retienne la partie de couvercle (1) sur la partie de base (2) ou débloque la partie de couvercle (1) par rapport à la partie de base (2), respectivement.

8. Coffre de transport (TC) pour moto, selon la revendication 7, **caractérisé en ce que**
- le membre de rétention (9, 20) est attaché au deuxième élément de contrôle de déblocage (10), et
- dans l'état fermé du coffre de transport, le deuxième élément (10) de contrôle de déblocage peut être actionné de façon à ce que le membre de rétention (9, 20) maintienne ou lâche, de manière sélective, une structure (22), de préférence fixe, de la partie de base (2) pour retenir la partie de couvercle (1) sur la partie de base (2) ou débloquer la partie de couvercle (1) par rapport à la partie de base (2), respectivement.

9. Coffre de transport (TC) pour moto, selon l'une quelconque des revendications précédentes, **caractérisé en ce que** la partie de couvercle (1) en plus comporte une serrure (10) ayant les positions suivantes:
- une première position dans laquelle le mécanisme de verrouillage (5) ne peut pas être débloqué par le premier élément de contrôle de déblocage (7) et le mécanisme de rétention (9, 20, 22) n'est pas débloqué par le deuxième élément de contrôle de déblocage (10), et
- au moins une deuxième position dans laquelle le mécanisme de verrouillage (5) peut être débloqué par le premier élément de contrôle de déblocage (7) et/ou le mécanisme de rétention (9, 20, 22) est débloqué par le deuxième élément de contrôle de déblocage (10).

10. Coffre de transport (TC) pour moto, selon la revendication 9, **caractérisé en ce que** la serrure (10) comprend
- une première position dans laquelle le mécanisme de verrouillage (5) ne peut pas être débloqué par le premier élément de contrôle de déblocage (7) et le mécanisme de rétention (9, 20, 22) n'est pas débloqué par le deuxième élément de contrôle de déblocage (10),
- une deuxième position dans laquelle le mécanisme de verrouillage (5) peut être débloqué par le premier élément de contrôle de déblocage (7) mais le mécanisme de rétention (9, 20, 22) n'est pas débloqué par le deuxième élément de contrôle de déblocage (10), et
- une troisième position dans laquelle le mécanisme de verrouillage (5) peut être débloqué par le premier élément de contrôle de déblocage (7) et le mécanisme de rétention (9, 20, 22) est débloqué par le deuxième élément de contrôle de déblocage (10).

11. Coffre de transport (TC) pour moto, selon la revendication 9, **caractérisé en ce que** la serrure (10) comprend
- une première position dans laquelle le mécanisme de verrouillage (5) ne peut pas être débloqué par le premier élément de contrôle de déblocage (7) et le mécanisme de rétention (9, 20, 22) n'est pas débloqué par le deuxième élément de contrôle de déblocage (10),
- une deuxième position dans laquelle le mécanisme de verrouillage (5) ne peut pas être débloqué par le premier élément de contrôle de déblocage (7) mais le mécanisme de rétention (9, 20, 22) est débloqué par le deuxième élément de contrôle de déblocage (10), et
- une troisième position dans laquelle le mécanisme de verrouillage (5) peut être débloqué par le premier élément de contrôle de déblocage (7) et le mécanisme de rétention (9, 20, 22) est débloqué par le deuxième élément de contrôle de déblocage (10).
